# EUROPÄISCHE PATENTSCHRIFT

(11) **EP 1 954 555 B1**
(45) Veröffentlichungstag und Bekanntmachung des Hinweises auf die Patenterteilung: **02.03.2011**
(21) Anmeldenummer: 06829203.6
(22) Anmeldetag: 30.11.2006
(51) Int. Cl.: B62M 1/04, B62M 1/08

(54) **MUSKELKRAFTBETRIEBENES FAHRZEUG, INSBESONDERE STEPPROLLER**
VEHICLE PROPELLED BY MUSCLE POWER, IN PARTICULAR SCOOTER
VEHICULE ENTRAINE PAR FORCE MUSCULAIRE, EN PARTICULIER TROTTINETTE

(30) Priorität: 30.11.2005 AT 19292005
(43) Veröffentlichungstag der Anmeldung: 13.08.2008
(73) Patentinhaber: Graditech Entwicklungs GmbH, 6080 Innsbruck-Vill (AT)
(72) Erfinder: BUCHBERGER, Martin, A-6020 Innsbruck (AT); BUCHBERGER, Peter, A-6020 Innsbruck (AT)
(74) Vertreter: Dilg, Haeusler, Schindelmann Patentanwaltsgesellschaft mbH
(86) Internationale Anmeldenummer: PCT/EP2006/011505
(87) Internationale Veröffentlichungsnummer: WO 2007/062841

(56) Entgegenhaltungen:
- DE-A1- 4 319 104
- GB-A- 1 513 167
- US-A- 3 039 790

## Beschreibung

### Feld der Erfindung

Die Erfindung betrifft ein muskelkraftbetriebenes Fahrzeug, insbesondere Stepproller, mit wenigstens einem Antriebsrad und wenigstens einer über einen Trittflächenhub bewegbaren Trittfläche, wobei die Kraftübertragung von der wenigstens einen beweglichen Trittfläche auf das Antriebsrad über ein Antriebselement erfolgt, das mit einem Ende mit der Bewegung der Trittfläche gekoppelt ist, und das kraft- oder formschlüssig über eine Antriebswelle geführt wird, die mit dem zumindest einen Antriebsrad über einen Freilaufmechanismus gekoppelt ist. Der nächst liegende Stand der Technik nach der Präambel der Anspruch 1 wird in der DE 4 319 104 A1 dargestellt. Hintergrund der Erfindung

Ausführungsbeispiele von muskelkraftbetriebenen Fahrzeugen, die vom Fahrer mittels zumindest einer über einen Trittflächenhub bewegbaren Trittfläche angetrieben werden und die auch eine Lenkvorrichtung aufweisen, werden zum Beispiel als Tretmobil, Stepproller, Wipproller oder Trethebelfahrrad bezeichnet. In der Regel sind derartige Fahrzeuge mit einer, insbesondere aber mit zwei solchen Trittflächen zum Beispiel in Form von Trethebeln ausgestattet, die der Fahrer vorzugsweise abwechselnd bewegt, insbesondere durch eine Tretbewegung. Die Trittfläche ist häufig in einem bestimmten Winkel drehbar um eine Achse gelagert. Es sind aber auch Ausführungsbeispiele bekannt, wo die Trittfläche nicht in einem bestimmten Winkel drehbar gelagert ist, sondern wo sich der Winkel zwischen Trittfläche und Bewegungsrichtung des Fahrzeuges kaum oder gar nicht ändert. Bei solchen Ausführungen wird die Trittfläche meist vor- und rückwärts oder auf- und abwärts oder kombiniert vor- und rückwärts sowie auf- und abwärts bewegt.

Die zumindest eine Trittfläche wird, nachdem eine Trittflächenbewegung in eine Richtung erfolgte und die Trittfläche anschließend wieder entlastet wurde, meist mittels einer Federeinrichtung wieder in ihre Ausgangsposition zurückbewegt. Es sind aber auch Ausführungsbeispiele mit zwei Trittflächen bekannt, bei denen die Rückführung der Trittflächen in die Ausgangslage über eine Koppelung durch abwechselndes Belasten der beiden Trittflächen erfolgt. Diese Koppelung der beiden Trittflächen kann beispielsweise durch mechanische oder hydraulische Elemente, Seil- oder Kettenzüge oder durch Anbringen der beiden Trittflächen auf einer Wippe erfolgen. Die Übersetzung des Trittflächenweges in zurückgelegte Fahrzeugwegstrecke erfolgt bei solchen Stepprollern zum Beispiel über je ein Antriebselement pro Trittfläche. Dieses Antriebselement ist in der Regel als vorzugsweise biegeweiches und dehnungssteifes Zugelement ausgebildet und wird kraft- oder formschlüssig über eine hier so genannte Antriebswelle geführt, die über einen Freilaufmechanismus (bzw. ein Richtgesperre) mit dem Antriebsrad gekoppelt ist. Diese Koppelung zwischen jeder zu einer Trittfläche gehörigen Antriebswelle und dem Antriebsrad durch je einen Freilaufinechanismus ist erforderlich, damit sich das Fahrzeug während des Rückhubes der Trittflächen - und damit während der Rückbewegung des jeweiligen Antriebselements - ungehindert weiterbewegen kann. Es ist selbstverständlich auch denkbar, diese Koppelung nicht nur über je einen Freilaufmechanismus, sondern auch noch über weitere mechanische Teile wie beispielsweise Zahnräder, Ketten, Riemen oder auch über eine Gangschaltung - beispielsweise eine Nabenschaltung - auszuführen.

Nachteilig an solchen muskelkraftbetriebenen Fahrzeugen nach dem Stand der Technik ist die Tatsache, dass in der Regel das Übersetzungsverhältnis zwischen Fahrzeugweg und Trittflächenweg über den gesamten Hub der Trittfläche konstant oder annähernd konstant ist. Dies hat zur Folge, dass solche Fahrzeuge für einen praxistauglichen Geschwindigkeits- und Lastbereich (zum Beispiel verschiedene Steigungen) eine Gangschaltung benötigen, da ansonsten zum Beispiel bei hohen Geschwindigkeiten die Trittfrequenz zu groß wird, oder gewisse Steigungen nicht oder nur schwer bewältigt werden können. Marktübliche Gangschaltungen sind zumeist technisch aufwändig, bedürfen der Wartung durch den Benützer (Schmieren, Einstellen) und vermindern grundsätzlich den Wirkungsgrad der Kraftübertragung, was bei muskelkraftbetriebenen Fahrzeugen einen besonders schwerwiegenden Nachteil darstellt.

Die Deutsche Offenlegungsschrift DE 43 19 1.04 A1 zeigt ein Ausführungsbeispiel eines Trethebelantriebes, bei dem sich die Übersetzung innerhalb des Trittflächenhubes ändert. Dies wird dadurch erreicht, dass das Antriebselement um eine Kurvenscheibe in Form einer Spirale geführt wird, die über einen Freilauf mit einer Antriebsscheibe gekoppelt ist. Der Verlauf der Übersetzung ergibt sich aus dem Verlauf des Verhältnisses der Wirkradien zwischen Kurvenscheibe und Antriebsscheibe. Nachteilig an diesem Antrieb und anderen Ausführungsbeispielen, bei denen das Antriebselement um eine Kurvenscheibe geführt wird, ist die Tatsache, dass die Kurvenscheibe maximal etwa eine Umdrehung pro Trittflächenhub machen kann, da sie bei weiterer Drehung mit dem Antriebselement kollidieren würde. Dies hat zur Folge, dass für einen praxistauglich großen Trittflächenhub (vorzugsweise ca. 40 cm) die Kurvenscheibe entsprechend groß sein muss, da der gesamte Trittflächenhub auf der maximal etwa einen Umdrehung der Kurvenscheibe Platz finden muss. Dies stellt sowohl hinsichtlich des Designs des Fahrzeuges einen Nachteil dar, als auch insbesondere wegen des aus der Größe der Kurvenscheibe resultierenden großen Trägheitsmoments der Kurvenscheibe, die im Fahrbetrieb eine oszillatorische Bewegung macht und bei jeder Änderung der Rotationsrichtung gebremst und neu beschleunigt werden muss. Ein weiterer Nachteil ergibt sich aus dem Umstand, dass zur Erreichung höherer Fahrgeschwindigkeiten das angetriebene Fahrzeugrad entweder sehr groß sein muss oder bei praxistauglichem Durchmesser mehrere Umdrehungen pro Trittflächenhub macht. Die maximal cirka eine Umdrehung der Kurvenscheibe muss daher - wie in DE 43 19 104 A1 auch gezeigt - mit einem Übersetzungsgetriebe wie zum Beispiel mit einem Ketten-, Riemen- oder Zahnradgetriebe auf das angetriebene Fahrzeugrad übersetzt werden, was sowohl für die Wartungsfreundlichkeit als auch insbesondere für den Wirkungsgrad des Antriebes einen schwerwiegenden Nachteil darstellt.

### Darstellung der Erfindung

Es mag daher ein Bedürfnis geben, ein muskelkraftbetriebenes Fahrzeug zu schaffen, bei dem sich die Nachteile des Standes der Technik verringern lassen.

Dieses Bedürfnis mag mittels einer Vorrichtung mit den Merkmalen gemäß dem unabhängigen Patentanspruch erfüllt werden. Vorteilhafte Ausgestaltungen ergeben sich aus den abhängigen Ansprüchen.

Gemäß einem exemplarischen Ausführungsbeispiel weist ein muskelkraftbetriebenes Fahrzeug, insbesondere Stepproller, wenigstens ein Antriebsrad und wenigstens eine über einen Trittflächenhub bewegbaren Trittfläche auf, wobei die Kraftübertragung von der wenigstens einen Trittfläche auf das wenigstens eine Antriebsrad durch ein Antriebselement erfolgt, das derart eingerichtet ist, dass mittels ihm eine Kraftübertragung auf die Antriebswelle ermöglicht werden kann, beispielsweise wird das Antriebselement kraft- und/oder formschlüssig über eine Antriebswelle geführt, wobei die Antriebswelle mit dem Antriebsrad über einen Freilaufmechanismus gekoppelt ist. Die Antriebswelle ist axial in zumindest zwei Bereiche mit voneinander unterschiedlichen oder variierenden Radien gegliedert, und das Antriebselement weist zumindest zwei Teilabschnitte mit voneinander unterschiedlichen Querschnitten auf, die so ausgebildet sind, dass innerhalb des Trittflächenhubes ein erster Teilabschnitt des Antriebselements über den ersten axialen Bereich der Antriebswelle geführt wird, ein zweiter Teilabschnitt des Antriebselements über den zweiten axialen Bereich der Antriebswelle geführt wird, und vorzugsweise über allfällige weitere axiale Bereiche der Antriebswelle weitere entsprechende Teilabschnitte des Antriebselements geführt werden. Unter axialen Bereichen der Antriebswelle mögen Bereiche verstanden werden, die entlang der Antriebswelle, d.h. entlang der Rotationsachse der Welle, angeordnet sind.

Mit anderen Worten sind die Teilabschnitte des Antriebselements, insbesondere ihre. Querschnitte, so ausgebildet, dass jederdieser Teilabschnitte nur auf den damit korrespondierenden axialen Bereich der Antriebswelle auflaufen kann. Dadurch mag es möglich sein, den Wirkradius der Antriebswelle - und damit die Übersetzung des Fahrzeuges - innerhalb des Trittflächenhubes zu variieren, ohne dass die Welle mit einem Trum des Antriebselements kollidiert, auch wenn sie während eines Trittflächenhubes mehrere Umdrehungen macht. Ein zusätzliches Übersetzungsgetriebe mag so zugunsten der Optimierung des Wirkungsgrades und der Wartungsfreundlichkeit vermieden werden.

Anschaulich beschrieben schafft ein beispielhaftes Ausführungsbeispiel der Erfindung ein muskelkraftbetriebenes Fahrzeug, insbesondere Stepproller, mit wenigstens einem Antriebsrad und wenigstens einer über einen Trittflächenhub bewegbaren Trittfläche, wobei die Kraftübertragung von der wenigstens einen Trittfläche auf das wenigstens eine Antriebsrad durch ein Antriebselement erfolgt, das kraft- oder formschlüssig über eine Antriebswelle geführt wird, die mit dem Antriebsrad über einen Freilaufmechanismus gekoppelt ist, **dadurch gekennzeichnet, dass** die Antriebswelle axial in zumindest zwei Bereiche mit voneinander unterschiedlichen oder variierenden Radien gegliedert ist, und das Antriebselement zumindest zwei Teilabschnitte mit voneinander unterschiedlichen Querschnitten aufweist, die so ausgebildet sind, dass innerhalb des Trittflächenhubes ein erster Teilabschnitt des Antriebselements über den ersten axialen Bereich der Antriebswelle geführt wird, ein zweiter Teilabschnitt des Antriebselements über den zweiten axialen Bereich der Antriebswelle gerührt wird, und vorzugsweise über allfällige weitere axiale Bereiche der Antriebswelle weitere entsprechende Teilabschnitte des Antriebselements gerührt werden.

Insbesondere mögen bei einem Fahrzeug gemäß einem exemplarischen Ausführungsbeispiel folgende Eigenschaften und Vorteile miteinander verknüpfbar sein:
- Der dem Fahrer an der Ferse zur Verfügung stehende Trittflächenhub, d.h. der maximale Hub, welchen die Trittflächen zwischen Ihrer Hochstellung und Niedrigstellung aufweisen, mag mindestens 30 cm, vorzugsweise cirka 40 cm betragen.
- Die,Änderung der Übersetzung während des Trittflächenhubes mag mindestens den Faktor 3 betragen, vorzugsweise cirka den Faktor 5.
- Die Änderung der Übersetzung mag während des Trittflächenhubes vorzugsweise kontinuierlich ansteigend sein. Beispielsweise mag die Trittfläche, wenn sie sich in einer oberen Ausgangsstellung befindet, zu einer niedrige Übersetzung korrespondieren, wohingegen mag sie zu einer hohen
- Übersetzung korrespondieren, wenn die Trittfläche sich in einer unteren Endstellung befindet.
- Insbesondere mag ein Übersetzungsbereich ohne zusätzliche Gangschaltung für Geschwindigkeiten in der Ebene bis ca. 30 km/h tauglich sein.
- Insbesondere mag ein Übersetzungsbereich ohne zusätzliche Gangschaltung für das Bewältigen von Steigungen von zumindest ca. 10 %, vorzugsweise auch einer größeren Steigung, tauglich sein.
- Ferner mag eine Optimierung des Wirkungsgrades der Kraftübertragung durch Minimierung der an der Kraftübertragung beteiligten mechanischen Elemente möglich sein, insbesondere durch Vermeidung eines Übersetzungsgetriebes zwischen der Antriebswelle und dem Antriebsrad, welches vorzugsweise die für Roller-Fahrzeuge günstige - verglichen mit Fahrrädern kleinere - Radgröße von ca. 12 bis 24 Zoll aufweisen.
- Auch mag der Antrieb besonders wartungsfreundlich ausgebildet werden können.
- Durch eine Ausgestaltung des Antriebselements und der Antriebswelle gemäß einem Ausführungsbeispiel der Erfindung mag es insbesondere möglich sein, dass die Antriebswelle und das Antriebselement stets fluchtend miteinander ausgebildet sind. Dies mag auch für den Fall gelten, dass das Antriebselement entlang mehr als einer vollen Umdrehung auf die Antriebswelle gewickelt ist.

Gemäß einer anderen exemplarischen Ausführungsvariante ist die Antriebswelle axial in zumindest zwei Bereiche gegliedert, wobei zumindest einer dieser axialen Bereiche so ausgebildet ist, dass sein Radius vorzugsweise kontinuierlich ansteigend variiert.

Gemäß einer anderen exemplarischen Ausführungsvariante sind die Längen und Querschnitte der Teilabschnitte des Antriebselements sowie jene axialen Bereiche der Antriebswelle, deren Radius vorzugsweise ansteigend variiert, so ausgebildet, dass alle Punkte, mit denen diese axialen Bereiche der Antriebswelle ins Antriebselement eingreifen, innerhalb eines Trittflächenhubes nur einmal ins Antriebselement eingreifen, auch wenn die Antriebswelle innerhalb eines Trittflächenhubes mehr als eine Umdrehung macht.

Definiert man die Übersetzung des Fahrzeuges als das Verhältnis von Fahrzeugweg zu Trittflächenweg und bezeichnet man den Radius des Antriebsrades mit R_{AR} und den Wirkradius der Antriebswelle, die über einen Freilaufmechanismus mit dem Antriebsrad koppelbar ist, mit R_{W} , so ist die Übersetzung des Fahrzeuges proportional zum Verhältnis R_{AR} / R_{W} . Durch die Ausbildung der Antriebswelle und des Antriebselements gemäß einem Ausführungsbeispiel der Erfindung mag es somit möglich sein, dass sich der Wirkradius R_{W} der Antriebswelle - und damit die Übersetzung des Fahrzeuges - innerhalb des Trittflächenhubes ändert, wobei es möglich sein mag, dass die Antriebswelle innerhalb des Trittflächenhubes mehr als eine Umdrehung machen kann, ohne mit einem Antriebselementtrum zu kollidieren. Im Folgenden wird der Zusammenhang zwischen Trittflächenstellung und Übersetzung des Fahrzeuges als Übersetzungskennlinie bezeichnet. Durch die Ausbildung der Topologie des Antriebselements und der Topologie der Antriebswelle, insbesondere des Verlaufes ihres Wirkradius, mag also die Übersetzungskennlinie des Fahrzeuges in weiten Grenzen gestaltbar sein. Insbesondere mag es dadurch möglich sein, die Übersetzungskennlinie derart zu gestalten, dass mit dem Fahrzeug bei ergonomisch angenehmer Trittfrequenz Steigungen von zumindest ca. 10 % und Geschwindigkeiten in der Ebene bis ca. 30 km/h bewältigt werden können, ohne dass der Fahrer eine Gangschaltung bedienen oder die Übersetzung selbst auswählen muss, da sich das tatsächliche Übersetzungsverhältnis beispielsweise je nach Trittfrequenz und Last, d.h. der Summe der auf das Fahrzeug wirkenden Bremskräfte, wie beispielsweise Luftwiderstand, Rollwiderstand oder Steigungen, automatisch einstellen mag. Beispielsweise mag die Übersetzungskennlinie derart gestaltet werden, dass die Übersetzung bei einer Trittflächenbewegung von oben nach unten kontinuierlich ansteigt. Hierdurch mögen die Trittflächen beispielsweise bei großer Trittfrequenz und / oder hoher Last im oberen, d.h. einem niedrig übersetzten, Bereich verbleiben, während bei kleiner Trittfrequenz und / oder niedriger Last sich die Trittflächen im unteren, d.h. hoch übersetzten, Bereich bewegen. Somit mag der Fahrer in allen Fahrzuständen allein durch die Wahl des Arbeitshubes und der Trittfrequenz Einfluss auf die Übersetzung und damit auf die Beschleunigung und Geschwindigkeit des Fahrzeuges nehmen. Als Arbeitshub wird hier jener Hub der Trittflächen bezeichnet, innerhalb dessen der Fahrer bei einer periodischen Trittflächenbewegung die Trittflächen bewegt, wohingegen der dem Fahrer maximal zur Verfügung stehende Hub der Trittflächen als Trittflächenhub bezeichnet wird.

Gemäß einem anderen exemplarischen Ausführungsbeispiel ist das Antriebselement über zumindest eine Umlenkrolle zur Antriebswelle geführt. Insbesondere können auch mehrere Umlenkrollen vorgesehen sein.

Gemäß einem anderen exemplarischen Ausführungsbeispiel ist zumindest eine der Umlenkrollen axial in zumindest zwei Bereiche mit voneinander unterschiedlichen Radien gegliedert, und das Antriebselement weist in jenem Abschnitt, in welchem es innerhalb des Trittflächenhubes über diese zumindest eine Umlenkrolle geführt ist, zumindest zwei Teilabschnitte mit voneinander unterschiedlichen Querschnitten auf, die so ausgebildet sind, dass das Antriebselement innerhalb des Trittflächenhubes über zumindest zwei der axialen Bereiche der Umlenkrolle geführt ist. Mit anderen Worten sind die Umlenkrolle und das Antriebselement gemäß diesem Ausführungsbeispiel so ausgebildet, dass innerhalb des Trittflächenhubes das Antriebselement in zumindest einem Teilabschnitt über den ersten axialen Bereich der Umlenkrolle geführt ist und in zumindest einem weiteren Teilabschnitt über den zweiten axialen Bereich der Umlenkrolle geführt ist, wobei die Radien dieser beiden und gegebenenfalls weiterer axialen Bereiche voneinander unterschiedlich sind. Dadurch mag es möglich sein, zusätzlichen Einfluss auf die Übersetzungskennlinie zu nehmen.

Bezeichnet man die Radien der beispielsweise zwei axialen Bereiche der Umlenkrolle beispielsweise mit r₁ und r₂ so gilt folgendes: Laufen sowohl das trittflächenseitige als auch das antriebswellenseitige Antriebselementtrum auf beispielsweise dem Radius r₁ , so beträgt die Übersetzung an der Umlenkrolle r₁ / r₁ = 1. Sobald zu einem Zeitpunkt während der Abwärtsbewegung der Trittfläche das antriebswellenseitige Antriebselementtrum auf den axialen Bereich der Umlenkrolle mit dem Radius r₂ aufläuft, so ändert sich das Verhältnis der Wirkradien an der Umlenkrolle - und damit die Übersetzung - kontinuierlich bis hin zum Wert r₂ / r₁. Gemäß einem Ausführungsbeispiel mag vorgesehen sein, dass die Trittflächenbewegung zu diesem Zeitpunkt ihren unteren Endpunkt erreichen kann. Bewegt sich die Trittfläche weiter nach unten bis sowohl das trittflächenseitige als auch antriebswellenseitige Antriebselementtrum auf dem Radius r₂ laufen, so mag sich die Übersetzung an der Umlenkrolle kontinuierlich weiter verändern, bis wieder der Wert Eins (r₂ / r₂ = 1) erreicht ist. Es mag also durch entsprechende Ausbildung der Umlenkrolle und des Antriebselements möglich sein, weitere Gradienten in die Übersetzungskennlinie einzubringen, weil in einem Teilabschnitt des Trittflächenhubes die Umlenkrolle wie ein Hebel mit verschieden langem Kraft- und Lastarm wirken mag. Diese weitere Änderung der Übersetzung durch zumindest eine entsprechende Umlenkrolle mag insbesondere aus folgendem Grund von Vorteil sein: In der Praxis kann der Radius - und damit der Wirkradius - der Antriebswelle einen bestimmten Wert nicht unterschreiten, weil innerhalb dieses kleinsten praktisch möglichen Radius noch beispielsweise die Achse und die Nabe des Antriebsrades Platz finden müssen. Da also der Wirkradius an der Antriebswelle nach unten limitiert ist, ist bei einer festen Wahl des Radius des Antriebsrades die Übersetzung durch die Antriebswelle nach oben limitiert. Durch die entsprechende Ausbildung der Topologie der Umlenkrolle und des Antriebselements mag es jedoch möglich sein, die maximale Gesamtübersetzung des Fahrzeuges in zumindest einem Teilabschnitt des Trittflächenhubes weiter zu erhöhen, ohne hierfür beispielsweise ein Übersetzungsgetriebe oder eine Gangschaltung in die Kraftübertragung einbringen zu müssen.

Gemäß anderen Ausführungsvarianten ist es auch vorgesehen, dass sowohl die Antriebswelle als auch zumindest eine Umlenkrolle mehr als zwei axiale Bereiche mit voneinander unterschiedlichen Radien aufweisen können, und das Antriebselement in entsprechend mehr Teilabschnitte mit Querschnitten gegliedert ist, welche gemäß einem Ausführungsbeispiel der Erfindung ausgebildet sind. Wodurch es möglich sein mag, in weiteren Teilabschnitten des Trittflächenhubes Einfluss auf die Übersetzungskennlinie des Fahrzeuges zu nehmen. Weiters ist es auch denkbar, das Antriebselement über mehr als eine Umlenkrolle zu führen und mit jeder dieser weiteren Umlenkrollen weiteren Einfluss auf die Übersetzungskennlinie zu nehmen.

Zusammengefasst ausgedrückt mag gemäß einem Ausführungsbeispiel die Antriebswelle und oder vorzugsweise zumindest eine Umlenkrolle in je zumindest zwei axiale Bereiche mit unterschiedlichen oder variablen Radien gegliedert sein, und das Antriebselement in Teilabschnitte mit unterschiedlichen Querschnitten gegliedert sein, die so ausgebildet sind, dass die Teilabschnitte des Antriebselements innerhalb des Trittflächenhubes auf dem jeweils korrespondierenden axialen Bereich der Antriebswelle bzw. Umlenkrolle geführt werden. Durch eine solche Ausgestaltung mag es möglich sein, die oben angegebenen Vorteile zu erzielen.

Eine Ausführungsvariante A sieht vor, dass dies dadurch erreicht wird, dass das Antriebselement zumindest zwei Teilabschnitte mit voneinander unterschiedlicher Breite oder mit Verbreiterungselementen aufweist. In dieser Ausführungsvariante A ist die Antriebswelle folgendermaßen ausgebildet: Der axiale Bereich mit dem kleinsten maximalen Radius ist in axialer Richtung - das heißt in Richtung der Achse der Antriebswelle - mittig oder zentral in Bezug auf die axiale Ausdehnung der Antriebswelle angeordnet, und der Bereich mit dem nächst größeren maximalen Radius ist axial beidseitig außen angeordnet, d.h. beispielsweise entlang der Rotationsachse der Welle weiter außen angeordnet als der mittige Bereich, welcher den kleinsten maximalen Radius aufweist. Eventuell vorgesehene weitere Bereiche sind nach der Größe ihres maximalen Radius ansteigend geordnet in vorzugsweise symmetrischer Anordnung axial beidseitig außerhalb des zweiten Bereiches angeordnet, d.h. es ergibt sich beispielsweise vom Zentrum der Welle aus gesehen eine ansteigende Funktion der maximalen Radien nach den Rändern der Welle hin, welche weiter außen liegen. Der erste Bereich der Antriebswelle ist gemäß dieser Ausfiihrungsvariante - in axialer Richtung - zumindest so breit wie das Antriebselement in seinem ersten Teilabschnitt. Die Breite kann auch als Tiefe oder Dimensionierung des ersten Bereichs der Antriebswelle entlang der Wellenachse verstanden werden. Dieser erste Bereich der Antriebswelle kann beispielsweise als Kurvenscheibe mit variierendem Radius ausgeführt sein. In einer Ausführungsvariante ist aber auch vorgesehen, dass sich der Radius des ersten Bereiches im Verlauf einer Umdrehung nicht ändert, wodurch es möglich sein mag, das Antriebselement über mehrere Umdrehungen kollisionsfrei über diesen ersten Bereich zu führen oder das Antriebselement an diesem ersten Bereich zu montieren und aufzuwickeln. Der zweite Bereich der Antriebswelle, ist axial beidseitig außerhalb des ersten Bereiches der Antriebswelle angeordnet und kann vorzugsweise als Paar von zwei deckungsgleichen Kurvenscheiben mit variablem Radius ausgebildet sein, wobei der Radius dieses zweiten Bereiches im gesamten Verlauf größer ist, als der größte Radius des ersten Bereiches. Ein eventuell ausgebildeter dritter Bereich - vorzugsweise ebenso als Paar von kongruenten Kurvenscheiben ausgebildet - ist axial beidseitig außerhalb des zweiten Bereiches angeordnet, ein vierter außerhalb des dritten und so fort. Mit anderen Worten liegt in Ausführungsvariante A jener Bereich der Antriebswelle mit dem kleinsten Radius in axialer Richtung mittig, und die weiteren Bereiche liegen nach ansteigenden Radien kaskadiert beidseitig außen in vorzugsweise symmetrischer Anordnung. In dieser Ausführungsvariante A ist die Breite des Antriebselements und / oder der Verbreiterungselemente vorzugsweise so ausgebildet, dass das Antriebselement in jedem seiner über die Antriebswelle geführten Teilabschnitte nur auf dem jeweils korrespondierenden axialen Bereich der Antriebswelle geführt wird. Beispielsweise ist das Antriebselement in seinem zweiten Teilabschnitt zumindest so breit, wie die Kurvenscheiben des zweiten Bereiches der Antriebswelle in axialer Richtung voneinander entfernt sind, jedoch schmaler, als der axiale Abstand der Kurvenscheiben des dritten Bereiches der Antriebswelle. Insbesondere mag es möglich sein, dass zwischen den axialen Bereichen der Radius kontinuierlich oder diskontinuierlich wechselt oder sich ändert. Beispielsweise kann ein erster axialer Bereich einen ersten Radius aufweisen, welcher auch spiralförmig veränderlich sein kann, wohingegen ein zweiter axialer Bereich einen zweiten Radius aufweist, welcher sich diskontinuierlich von dem ersten Radius unterscheidet. Es mag also möglich sein, bei einem Wechsel vom ersten zum zweiten axialen Bereich einen sprunghaften Wechsel im Radius auszubilden, insbesondere mag es nicht notwendig sein, einen kontinuierlichen Übergang, wie beispielsweise mittels einer Spirale, zwischen den beiden Bereichen auszubilden.

Die Topologie der Umlenkrolle ist in Ausführungsvariante A analog jener der gemäß Ausbildungsvariante A ausgebildeten Antriebswelle, wobei es allerdings von Vorteil sein mag, alle axialen Bereiche der Umlenkrolle mit jeweils konstantem Radius auszuführen. Die gemäß Ausführungsvariante A ausgebildete Umlenkrolle mag also folgende Gestalt haben: Der axiale Bereich mit dem kleinsten Radius ist in axialer Richtung mittig angeordnet, und der Bereich mit dem nächst größeren Radius ist axial beidseitig außen angeordnet, und eventuell vorhandene weitere Bereiche sind nach der Größe ihres Radius ansteigend geordnet in vorzugsweise symmetrischer Anordnung axial beidseitig außerhalb des zweiten Bereiches angeordnet.

Eine Ausführungsvariante B sieht vor, dass das Antriebselement zumindest einen Teilabschnitt mit zumindest zwei Strängen aufweist. Aus der Zuordnung der Teilabschnitte des Antriebselements zu axialen Bereichen der Antriebswelle oder Umlenkrolle gemäß einem exemplarischen Ausführungsbeispiel ergibt sich, dass sämtliche Stränge des Antriebselements vorzugsweise symmetrisch zur Längsachse des Antriebselements so angeordnet sind, dass das Antriebselement in jedem seiner Teilabschnitte nur über den jeweiligen axialen Bereich der Antriebswelle oder Umlenkrolle geführt wird. Dadurch mag es beispielsweise auch möglich sein, die Topologie der Umlenkrolle -und analog dazu die Topologie der Antriebswelle- von Ausführungsvariante A in axialer Richtung dergestalt umzukehren, dass nunmehr der axiale Bereich der Antriebswelle mit dem kleinsten (maximalen) Radius axial beidseitig ganz außen und jener Bereich mit dem größten (maximalen) Radius in axialer Richtung mittig zu liegen kommt.

In einem exemplarischen Ausführungsbeispiel von Ausführungsvariante B hat die Umlenkrolle bzw. die Antriebswelle somit folgende Topologie: Der axiale Bereich mit dem größten (maximalen) Radius ist in axialer Richtung mittig angeordnet, und der Bereich mit dem nächst kleineren (maximalen) Radius ist axial beidseitig außen angeordnet, und eventuell ausgebildete weitere Bereiche sind nach der Größe ihres (maximalen) Radius absteigend geordnet in vorzugsweise symmetrischer Anordnung in axialer Richtung beidseitig außerhalb des zweiten Bereiches angeordnet.

Durch eine solche Ausgestaltung des Antriebselements mag es auch bei einer solchen, zur Ausführungsvariante A umgekehrten, Topologie möglich sein, eine Führung der Teilabschnitte des Antriebselements über die entsprechenden axialen Bereiche der Antriebswelle oder Umlenkrolle zu ermöglichen, ohne dass es beispielsweise zu Kollisionen der Antriebswelle mit dem Antriebselement kommt, wenn die Antriebswelle mehr als eine Umdrehung macht. Es mag jedoch auch möglich sein, ein gemäß Ausführungsvariante B ausgebildetes Antriebselement mit einer gemäß Variante A ausgebildeten Antriebswelle oder Umlenkrolle zu kombinieren.

Selbstverständlich sind auch weitere Kombinationen aus den beiden Ausführungsvarianten A und B denkbar. Beispielsweise kann eine gemäß Variante A ausgebildete Antriebswelle mit einer gemäß Variante B ausgebildeten Umlenkrolle kombiniert werden, wobei das Antriebselement in jenem Abschnitt, in dem es über die Antriebswelle geführt wird, gemäß Variante A ausgeführt sein kann, und in jenem Abschnitt, in dem es innerhalb des Trittflächenhubes über die Umlenkrolle geführt ist, gemäß Variante B auszuführen ist.

Als Antriebselement kommen grundsätzlich alle zugfesten und biegeweichen Zugelemente wie beispielsweise Textil- oder Kunststoffbänder, Riemen, Seile, Schnüre, Ketten oder Kettenbänder in Frage. Eine Änderung des Querschnittes - insbesondere der Breite - des Antriebselements in seinen Teilabschnitten gemäß Ausführungsvariante A kann gemäß einem Ausführungsbeispiel beispielsweise durch das Aneinanderfügen von Antriebselementen unterschiedlicher Breite oder durch das Anbringen von Verbreiterungselementen am Antriebselement erfolgen. Diese Verbreiterungselemente können beispielsweise als Plättchen oder Stifte oder - insbesondere bei der Verwendung von Seilen oder Schnüren als Antriebselement - als vorzugsweise rotationssymmetrische Elemente (z.B. Ellipsoide oder Kugeln) ausgeführt sein. Bei der Verwendung von Antriebselementen, die nicht nur in Längsrichtung, sondern auch lateral biegeweich sind (z.B. Textilbänder), mag es insbesondere in Ausführungsvariante A von Vorteil sein, das Antriebselement zumindest in einem Teilabschnitt durch Versteifungselemente lateral zu versteifen. Diese Versteifungselemente sind vorzugsweise als Stifte oder Plättchen ausgeführt, die quer zur Längsrichtung des Antriebselements angebracht sind, um so möglicherweise die Biegeweichheit des Antriebselements in Längsrichtung nicht zu mindern. Bei der Verwendung eines gewobenen Bandes als Antriebselement können die Verbreiterungselemente oder die Versteifungselemente auch ins Band eingewoben sein. Weiters ist es für alle Ausführungsvarianten der Erfindung denkbar und möglicherweise vorteilhaft, dass das Antriebselement, die Verbreiterungselemente, die Versteifungselemente oder die Antriebswelle und die Umlenkrollen mit Substanzen wie beispielsweise Gummi oder Kunststoff beschichtet sind, um möglicherweise ein geräuscharmes Auflaufen des Antriebselements oder der darauf angebrachten Elemente auf die Antriebswelle und die Umlenkrollen zu gewährleisten.

Weiters ist gemäß einem exemplarischen Ausführungsbeispiel vorgesehen, dass am Antriebselement Führungselemente angebracht sind, die vorzugsweise ein lateral geführtes Auflaufen des Antriebselements auf die Antriebswelle und / oder auf die Umlenkrollen sicherstellen. Ebenso ist gemäß einem exemplarischen Ausführungsbeispiel vorgesehen, dass die Antriebswelle oder die Umlenkrollen so ausgebildet sind, dass das Antriebselement vorzugsweise lateral (bzw. mit anderen Worten in axialer Richtung der jeweiligen Welle oder Rolle) in Führung gehalten wird.

Das Antriebselement ist vorzugsweise über die mit dem Antriebsrad über einen Freilaufmechanismus gekoppelte Antriebswelle geführt. Daher ist denkbar und gemäß einem exemplarischen Ausführungsbeispiel vorgesehen, das Antriebselement an dieser Antriebswelle auf- und abwickelbar zu befestigen.

Es ist beispielsweise aber auch denkbar, das Antriebselement kraft- oder formschlüssig über die Antriebswelle zu führen und mit dem Rahmen des Fahrzeuges oder der Trittfläche zu verbinden.

In allen Fällen mag es jedoch sinnvoll sein, durch zumindest eine Federeinrichtung das Antriebselement stets gespannt zu halten. Eine solche Federeinrichtung mag außerdem dazu dienen, die Trittfläche nach der erfolgten Trittflächenbewegung in ihre Ausgangslage zurückzuführen. Dadurch mag es möglich sein, bei Ausführungen eines solchen muskelkraftbetriebenen Fahrzeuges mit zwei Trittflächen, die zwei Trittflächen nicht gekoppelt auszuführen. Jedoch sind Koppelungen der Trittflächen durch zusätzliche mechanische oder hydraulische Elemente denkbar.

Die Erfindung sieht in einer exemplarischen Ausführungsvariante auch vor, dass das Antriebselement unterschiedlich dick über die Länge ausgebildet ist. Ändert sich die Dicke des Antriebselements beispielsweise in dem Abschnitt, in dem es auf die Antriebswelle aufgewickelt wird, verändert sich dadurch während des Auf- und Abwickelns das Verhältnis der Wirkradien von Antriebsrad und Antriebswelle, wodurch somit ein zusätzlicher Gradient in die Übersetzungskennlinie eingebracht werden mag. Diese Änderung der Dicke des Antriebselements kann beispielsweise durch das Anbringen von Verdickungselementen erfolgen, die - analog zu beispielsweise den Versteifungselementen - vorzugsweise so ausgeführt sind, dass das Antriebselement biegeweich bleibt. Insbesondere kann unter der Dicke des Antriebselements die Dimension des Antriebselements verstanden werden, welche senkrecht zur Längsrichtung, d.h. der Bewegungsrichtung des Antriebselements, und senkrecht zur Breite des Antriebselements, d.h. der Längsrichtung der Antriebswelle oder der axialen Richtung, steht.

In einer weiteren exemplarischen Ausführungsvariante der Erfindung ist auch vorgesehen, dass das trittflächenseitige Ende des Antriebselements verstellbar montiert ist. Dadurch mag beispielsweise die Stellung der Antriebswelle in der (oberen) Ausgangsstellung der Trittfläche verstellt werden können, und folglich mag dadurch die Übersetzung zu Beginn - und damit auch im weiteren Verlauf - des Trittflächenhubes verstellbar bzw. einstellbar ausgeführt werden. Mit anderen Worten mag es dadurch möglich sein, den Antriebselementhub bezogen auf den Trittflächenhub zu verschieben und - damit zusammenhängend - den Trittflächenhub bezogen auf die Übersetzungskennlinie zu verschieben. Dadurch mögen verschiedene Übersetzungskennlinien für unterschiedliche Geschwindigkeitssowie Lastbereiche (beispielsweise unterschiedliche Steigungen) einstellbar sein, ohne dass hierfür zusätzliche mechanische Elemente in die Kraftübertragung eingebracht werden müssen.

Außerdem ist gemäß einem exemplarischen Ausführungsbeispiel der Erfindung vorgesehen, dass das trittflächenseitige Ende des Antriebselements und / oder zumindest eine Umlenkrolle gefedert montiert ist. Beispielsweise mag dadurch der Fahrkomfort erhöht werden, insbesondere beim Befahren von Unebenheiten.

Ein besonderer Vorteil der Erfindung mag möglicherweise darin liegen, dass trotz der vielfältigen Möglichkeiten, die Übersetzungskennlinie zu gestalten, die Anzahl der an der Kraftübertragung beteiligten mechanischen Elemente möglicherweise minimiert werden kann, was sowohl für den Wirkungsgrad als auch für die Wartungsfreundlichkeit von Vorteil sein mag: In einer exemplarischen Ausführungsvariante der Erfindung läuft das Antriebselement über nur eine Umlenkrolle auf die Antriebswelle, die mit dem Antriebsrad lediglich über einen Freilauf gekoppelt ist.

Außerdem mag das Fahrzeug durch niedrige, kurze und leichte Fahrzeugkonstruktion insbesondere gegenüber dem herkömmlichen Fahrrad noch weitere Vorteile aufweisen, wie zum Beispiel mehr Handlichkeit, mehr Komfort beim Auf- und Absteigen (insbesondere im Stadtbetrieb) und kleines Packmaß sowie in einer Ausführungsvariante auch Zusammenklappbarkeit, wodurch es in PKW oder öffentlichen Verkehrsmitteln einfach transportiert werden kann. Gemäß einem Ausführungsbeispiel ist es vorgesehen, das Fahrzeug mit Bremsen sowie mit weiteren Einrichtungen, die der Verkehrssicherheit dienen, wie beispielsweise Klingel, Reflektoren an beweglichen und unbeweglichen Teilen und Lichtanlage auszurüsten. Zusätzlich kann es mit einem Spritzschutz, sowie mit einem Wetterschutz wie beispielsweise einem Dach versehen sein. Es mag außerdem praktisch wartungsfrei sein. Zum Beispiel kann es so ausgerührt sein, dass es keine Teile mehr gibt, die vom Benützer geschmiert oder nachjustiert werden müssen. Um einen erhöhten Komfort zu erzielen, kann das Fahrzeug auch mit einem Sitz oder Sattel, sowie mit Einrichtungen zum Befestigen von Gepäck oder eines Kindersitzes ausgerüstet sein. Weiters kann das Fahrzeug auch mit einem klappbaren Ständer und mit einer Absperrvorrichtung ausgerüstet sein. Im Vergleich zu Fahrrädern mögen solche Stepproller insbesondere den Vorteil haben, dass die beim Fahrrad verwendeten Tretkurbeln bei einer 360°-Bewegung zwei Totpunkte durchlaufen, was bei einem solchen Stepproller nicht der Fall ist. Außerdem mag die stehende Tretbewegung ergonomisch günstiger sein als die sitzende Drehkurbelbewegung beim Fahrrad.

Es sind natürlich auch Ausführungsvarianten denkbar, bei denen die hier so genannten Trittflächen nicht mit den Füßen, sondern mit den Händen oder mit anderen Körperteilen bewegt werden, sodass die Vorteile der Erfindung, insbesondere die in weiten Grenzen gestaltbare Übersetzungskennlinie und der hohe Wirkungsgrad, möglicherweise auch in Anwendungen wie beispielsweise Rollstühlen zur Geltung kommen können.

Ein beispielhafter Aspekt der Erfindung mag auch darin gesehen werden, eine Antriebsvorrichtung für ein muskelkraftbetriebenes Fahrzeug zu schaffen, wobei die Antriebsvorrichtung eine Antriebswelle und ein Antriebselement aufweist. Die Antriebswelle weist entlang ihrer axialen Richtung zumindest einen ersten Bereich mit einem ersten Radius und einen zweiten Bereich mit einem zweiten Radius auf, wobei der erste Radius unterschiedlich zu dem zweiten Radius ist. Das Antriebselement weist entlang einer Länge des Antriebselements zumindest einen ersten Teilabschnitt und einen zweiten Teilabschnitt auf, wobei ein Querschnitt des ersten Teilabschnitts unterschiedlich zu einem Querschnitt des zweiten Teilabschnitts ist. Ferner sind die Antriebswelle und das Antriebselement derart aneinander angepasst, dass bei einer Bewegung des Antriebselements der erste Teilabschnitt des Antriebselements über den ersten Bereich der Antriebswelle und der zweite Teilabschnitt über den zweiten Bereich führbar ist. Anschaulich kann darunter verstanden werden, dass entlang der Länge des Antriebselements dieses unterschiedliche Querschnitte aufweist (d.h. in Ausführungsvariante A insbesondere unterschiedliche Breiten und in Ausführungsvariante B insbesondere eine unterschiedliche Anzahl von Strängen), wobei die jeweiligen Querschnitte des Antriebselementes an jeweiligen axialen Bereiche der Antriebswelle angepasst sind. Damit mag es möglich sein, dass während einer Bewegung des Antriebselements der erste Teilabschnitt nur entlang des ersten axialen Bereichs geführt wird, wohingegen sich der zweite Teilabschnitt nur entlang des zweiten axialen Bereichs gerührt wird.

Gemäß einem exemplarischen Ausführungsbeispiels dieses Aspekts sind die Antriebswelle und das Antriebselement derart aneinander angepasst, dass bei einer Bewegung des Antriebselements das Antriebselement im gesamten Verlauf der Bewegung des Antriebsmittels fluchtend zu der Antriebswelle ausgerichtet ist. Insbesondere mag hierbei unter fluchtend verstanden werden, dass keine seitliche Ausweichbewegung des Antriebselements notwendig ist, wenn es über die Antriebswelle ab- oder aufgewickelt wird. Somit mag das Antriebselement im gesamten Verlauf der Bewegung senkrecht zu der Achse der Antriebswelle verlaufen, wodurch möglicherweise innere Verluste der Antriebsvorrichtung verringert und ein Wirkungsgrad der Antriebsvorrichtung verbessert werden können. Dies mag auch für den Fall gelten, dass mehr als eine vollständige Umdrehung der Antriebswelle durchgeführt wird. Somit mag es gemäß diesem Aspekt vermeidbar sein, dass die Antriebswelle einen schneckenförmigen Bereich oder eine schneckenförmige Führung mit einer Steigung in Richtung der Achse der Antriebswelle aufweist, über welche das Antriebselement während seiner Bewegung geführt wird und durch welche das Antriebselement während seiner Bewegung eine seitliche Ausweichbewegung vollführt und nicht immer senkrecht auf die Antriebswelle verläuft.

### Kurzbeschreibung der Figuren

Weitere Einzelheiten und Vorteile der Erfindung werden an Hand der nachfolgenden Figuren beschrieben und näher erläutert:
- Fig. 1: zeigt schematisch ein exemplarisches Ausführungsbeispiel eines Stepprollers mit zwei Trittflächen, hier als Trethebel ausgeführt, wobei Bremsen und andere Einrichtungen, die der Verkehrssicherheit oder dem Komfort dienen, nicht dargestellt sind,
- Fig. 2: zeigt schematisch ein exemplarisches Ausführungsbeispiel der Antriebswelle gemäß Ausführungsvariante A mit zwei axialen Bereichen, sowie ein über die Antriebswelle geführtes gemäß einem Ausführungsbeispiel ausgebildetes Antriebselement, wobei in Fig. 2a eine Seitenansicht und in Fig.'2b ein Schnitt entlang der Linie A-A dargestellt ist,
- Fig. 3: zeigt schematisch eine Schrägansicht der Antriebswelle mit zwei axialen Bereichen sowie des über diese Antriebswelle geführten Antriebselements gemäß Ausführungsvariante A,
- Fig. 4a-d: zeigen schematisch vier exemplarische Ausführungsbeispiele für das Antriebselement gemäß Ausführungsvariante A, jeweils in Draufsicht und Schnitt,
- Fig. 5: zeigt schematisch ein exemplarisches Ausführungsbeispiel der Antriebswelle gemäß Ausführungsvariante B mit zwei axialen Bereichen, sowie ein über die Antriebswelle geführtes gemäß einem Ausführungsbeispiel ausgebildetes Antriebselement, wobei in Fig. 5a eine Seitenansicht und in Fig. 5b ein Schnitt entlang der Linie E-E dargestellt ist,
- Fig. 6: zeigt schematisch eine Schrägansicht der Antriebswelle gemäß Ausführungsvariante B mit zwei axialen Bereichen,
- Fig. 7a und b: zeigen schematisch zwei exemplarische Ausführungsbeispiele des Antriebselements gemäß Ausführungsvariante B,
- Fig. 8a-c: zeigen schematisch eine Änderung der Übersetzung an einer Umlenkrolle gemäß Ausführungsvariante A,
- Fig.9 a: zeigt schematisch eine Detailansicht der für die Kraftübertragung maßgeblichen Teile gemäß dem in Fig. 1 gezeigten Ausführungsbeispiel, wobei eine Änderung der Übersetzung sowohl an der Antriebswelle als auch an einer Umlenkrolle gemäß Ausführungsvariante A der Erfindung dargestellt ist,
- Fig. 9b: zeigt schematisch den qualitativen Verlauf der Übersetzungskennlinie des in Fig. 9a dargestellten exemplarischen Ausführungsbeispiels als Zusammenhang zwischen der Trittflächenstellung und der Gesamtübersetzung des Fahrzeuges.

### Ausführliche Beschreibung exemplarischer Ausführungsbeispiele

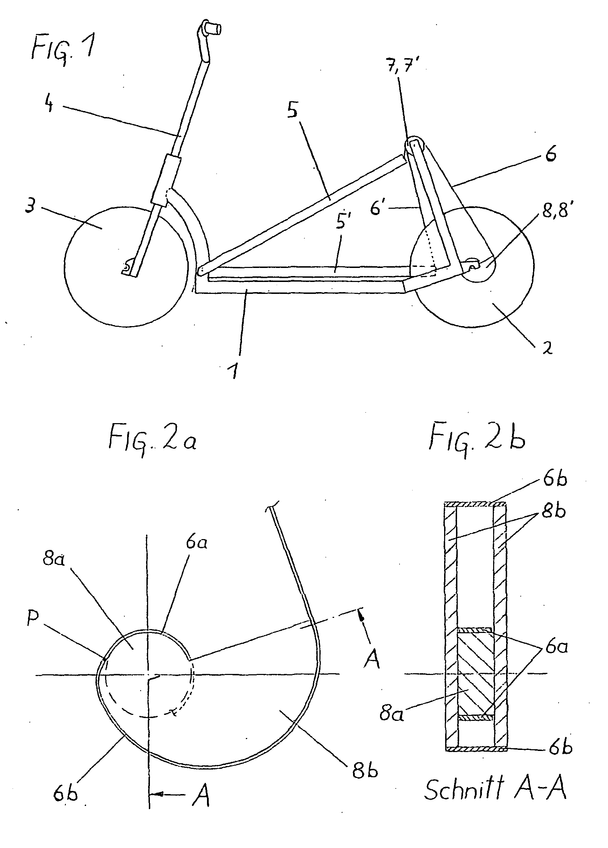

Das in Fig. 1 schematisch dargestellte muskelkraftbetriebene Fahrzeug stellt ein exemplarisches Ausführungsbeispiel eines Stepprollers mit zwei Trittflächen 5, 5' dar, die als Trethebel ausgeführt sind. Gezeigt sind ein Fahrzeugrahmen 1, zwei mit dem Fahrzeugrahmen 1 gelenkig verbundene Trittflächen 5, 5', ein Antriebsrad 2 eine sowie ein weiteres Rad 3, das über eine Vorrichtung zum Lenken 4 mit dem Fahrzeugrahmen 1 gelenkig verbunden ist. In Ausführungsbeispielen können die muskelkraftbetriebenen Fahrzeuge der genannten Gattung auch mehrere Antriebsräder 2 oder zusätzliche Räder 3 aufweisen. Ausführungsvarianten für mehr als eine Person sind ebenfalls denkbar. Im gezeigten Ausführungsbeispiel wird das Antriebselement 6 von der in der oberen Ausgangsstellung des Trittflächenhubes gezeigten Trittfläche 5 über eine mit dem Fahrzeugrahmen 1 verbundene Umlenkrolle 7 zur Antriebswelle 8 geführt, die mit der Nabe des Antriebsrades 2 über einen - in Fig. 1 nicht gezeigten - Freilaufmechanismus gekoppelt ist. Das Antriebselement 6' wird von der in der unteren Endstellung des Trittflächenhubes gezeigten Trittfläche 5' über die Umlenkrolle 7' zur Antriebswelle 8' geführt. Die Umlenkrolle 7' ist in der Figur nicht erkennbar, da sie normal zur Bildebene genau hinter der Umlenkrolle 7 liegt. Die Antriebswelle 8' ist ebenso nicht erkennbar, da sie hinter der Antriebswelle 8 und dem Antriebsrad 2 liegt. Das Antriebselement 6, 6' ist im gezeigten Ausführungsbeispiel an der Antriebswelle 8, 8' auf- und abwickelbar montiert und wird durch eine Federeinrichtung wie beispielsweise eine Spiralfeder, die auf die Antriebswelle 8, 8' wirkt, von seinem an der Antriebswelle montierten Ende aus gespannt. Diese Federeinrichtung ist in Fig. 1 und in den folgenden Figuren zugunsten der Übersichtlichkeit der Darstellungen nicht gezeigt. In der in Fig. 1 gezeigten Darstellung erzeugt diese Federeinrichtung auf die Antriebswelle 8,8' ein Drehmoment im Uhrzeigersinn, wodurch das Antriebselement stets gespannt gehalten wird. Es ist aber auch denkbar und kann in einem Ausführungsbeispiel vorgesehen sein, das Antriebselement von der Trittfläche kraft- oder formschlüssig über die Antriebswelle und von dort weiter zum Fahrzeugrahmen oder zurück zur Trittfläche zu führen und dieses von der Antriebswelle weiter führende und an der Kraftübertragung auf die Antriebswelle nicht beteiligte Antriebselementtrum - und damit das gesamte Antriebselement - durch eine Federeinrichtung gespannt zu halten.

Fig. 2 zeigt schematisch ein Ausführungsbeispiel der Antriebswelle 8 mit zwei axialen Bereichen 8a und 8b gemäß der Ausführungsvariante A der Erfindung, wobei in Fig. 2a eine Seitenansicht und in Fig. 2b ein Schnitt entlang der Linie A-A dargestellt ist. Deutlich erkennbar ist, dass der axiale Bereich 8a mit dem kleineren Radius axial mittig liegt und der als zwei kongruente Kurvenscheiben ausgebildete Bereich 8b mit dem größeren Radius axial beidseitig außerhalb. Weiters ist in dieser Figur das über die Antriebswelle 8 geführte und gemäß Ausführungsvariante A ausgebildete Antriebselement 6 dargestellt, wobei deutlich erkennbar ist, dass der (schmalere) Teilabschnitt 6a des Antriebselements 6 nur über den axialen Bereich 8a der Antriebswelle 8 geführt werden kann und dass der (breitere) Teilabschnitt 6b des Antriebselements nur über den korrespondierenden axialen Bereich 8b der Antriebswelle 8 geführt werden kann. Schmaler bedeutet in diesem Zusammenhang insbesondere, dass die Dimensionierung des Antriebselements in Richtung der Rotationsachse der Antriebswellen geringer ist als in einem Bereich größerer Breite. Zur Verdeutlichung ist in Fig. 2a jene Stelle am Antriebselement 6, wo der Teilabschnitt 6a in den Teilabschnitt 6b übergeht, mit dem Buchstaben P bezeichnet. Weiters sind zur Verdeutlichung der axiale Bereich 8a der Antriebswelle und ein Stück des Teilabschnittes 6a des Antriebselements dort, wo sie in der Seitenansicht von Fig. 2a hinter dem Teilbereich 8b der Antriebswelle zu liegen kommen, strichliert eingezeichnet. Das in Fig. 2a nicht gezeigte Ende des Teilabschnittes 6a ist auf dem Teilbereich 8a der Antriebswelle montiert, sodass der Teilabschnitt 6a auf dem Teilbereich 8a der Antriebswelle auf- und abwickelbar ist. Zugunsten der Übersichtlichkeit der Darstellungen ist in Fig. 2a und 2b und in allen folgenden Figuren jeweils nur eine Wicklung gezeigt. Es ist jedoch in beiden Ausführungsvarianten A und B denkbar und in Ausführungsbeispielen auch vorgesehen, das Antriebselement in seinem Teilabschnitt 6a über mehrere Umdrehungen auf dem Teilbereich 8a der Antriebswelle aufzuwickeln.

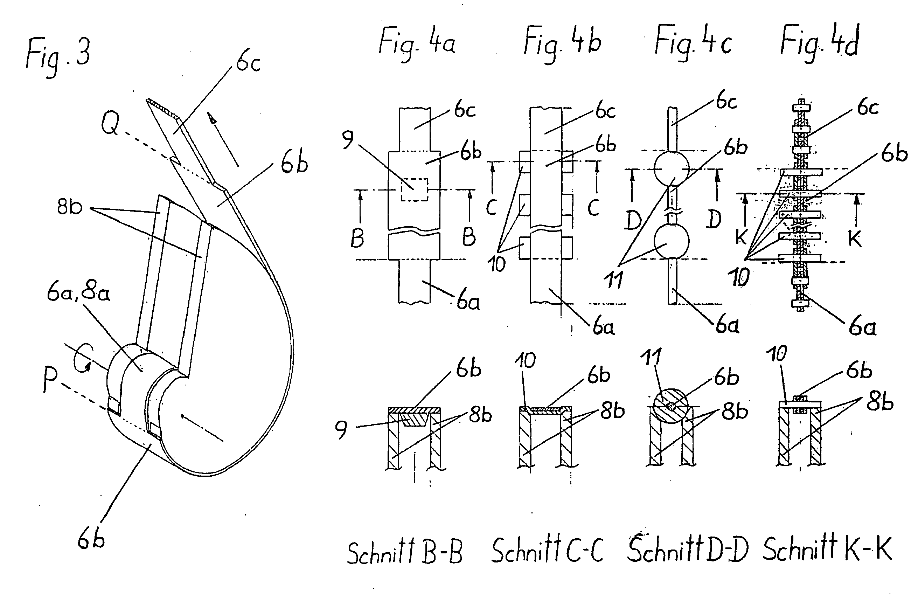

Fig. 3 zeigt in einer schematischen Schrägansicht die Antriebswelle 8 mit zwei axialen Teilbereichen 8a und 8b sowie das über die Antriebswelle geführte Antriebselement 6 gemäß einem Ausführungsbeispiel von Ausführungsvariante A. Auch hier ist deutlich erkennbar, dass das Antriebselement 6 zwei Teilabschnitte 6a und 6b aufweist, deren Querschnitt so ausgebildet ist, dass das Antriebselement in jedem dieser Teilabschnitte über den jeweils korrespondierenden axialen Bereich 8a bzw. 8b der Antriebswelle geführt wird. Der in Fig. 3 dargestellte dritte Teilabschnitt 6c des Antriebselements wird nicht über die Antriebswelle 8 geführte, sondern zur in Fig. 1 dargestellten Umlenkrolle 7.

In Fig. 4a-d sind vier Ausführungsbeispiele des Antriebselements 6 gemäß Ausführungsvariante A jeweils in Draufsicht und Schnitt dargestellt, wobei zur Verdeutlichung in den Schnitten jeweils auch der axiale Bereich 8b der Antriebswelle 8 eingezeichnet ist. Fig. 4a zeigt schematisch ein in drei Teilabschnitte 6a-c unterschiedlicher Breite gegliedertes Antriebselement, wobei in Teilabschnitt 6b am Antriebselement Führungselemente 9 angebracht sind, welche das Antriebselement auf der Antriebswelle axial oder seitlich in Führung halten. Fig. 4b zeigt schematisch ein Ausführungsbeispiel, bei dem die Änderung des Querschnittes (insbesondere der Breite) des Antriebselements in einem Teilabschnitt 6b dadurch erfolgt, dass am Antriebselement Verbreiterungselemente 10 angebracht sind. Im gezeigten Ausführungsbeispiel sind diese Verbreiterungselemente 10 so ausgebildet, dass sie gleichzeitig auch die Funktion von Führungselementen übernehmen können. Fig. 4c zeigt schematisch ein Antriebselement, welches beispielsweise als Schnur oder Seil ausgebildet ist, und welches in Teilabschnitt 6b vorzugsweise rotationssymmetrische Elemente 11 aufweist, die sowohl als Verbreiterungselemente wie auch als Führungselemente dienen. Fig. 4d zeigt ein Ausführungsbeispiel, in welchem das Antriebselement 6 als Flyer-Kette ausgebildet ist. Es sind jedoch auch andere Kettentypen - beispielsweise Rollenketten - als Ausführungen des Antriebselements denkbar. Die abschnittsweise Verbreiterung des Antriebselements 6 erfolgt im in Fig. 4d gezeigten Ausführungsbeispiel durch abschnittsweise unterschiedliche Längen der Ketten-Nieten, welche in Abschnitt 6b die Funktion der Verbreiterungselemente 10 übernehmen.

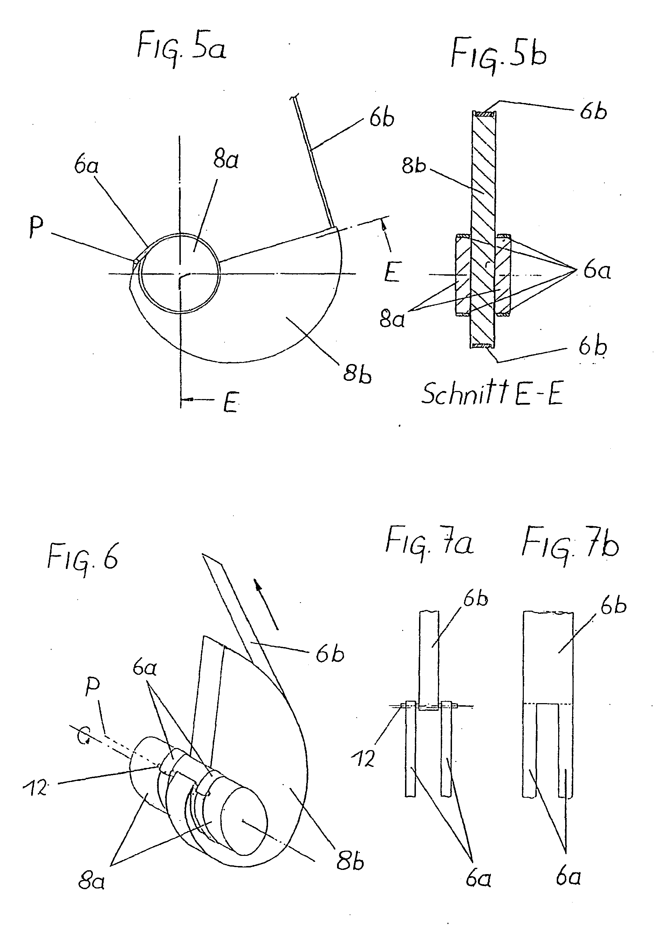

Fig. 5 zeigt schematisch ein Ausführungsbeispiel der Antriebswelle 8 mit zwei axialen Bereichen 8a und 8b gemäß der Ausführungsvariante B der Erfindung, wobei in Fig. 5a die Seitenansicht und in Fig. 5b der Schnitt entlang der Linie E-E dargestellt ist. Deutlich erkennbar ist, dass der axiale Bereich 8a mit dem kleineren Radius axial beidseitig außen liegt, und der als Kurvenscheibe ausgebildete Bereich 8b mit dem größeren Radius axial mittig. Weiters ist in dieser Figur das über die Antriebswelle 8 geführte und gemäß Ausführungsvariante B ausgebildete Antriebselement 6 dargestellt, wobei deutlich erkennbar ist, dass der Teilabschnitt 6a des Antriebselements 6 zwei Stränge aufweist, die so angeordnet sind, dass sie nur über den axialen Bereich 8a der Antriebswelle 8 geführt werden. Im Teilabschnitt 6b besteht das Antriebselement aus nur einem Strang, der nur über den korrespondierenden axialen Bereich 8b der Antriebswelle 8 gerührt wird. Zur Verdeutlichung ist jene Stelle am Antriebselement, wo der eine Strang des Teilabschnittes 6b in die beiden Stränge des Teilabschnittes 6a übergeht, mit dem Buchstaben P bezeichnet. Im gezeigten Ausführungsbeispiel ist der als Kurvenscheibe ausgeführte axiale Teilbereich 8b der Antriebswelle so ausgeführt, dass Antriebselement lateral, also in Richtung der Achse der Antriebswelle, in Führung gehalten wird. Selbstverständlich ist eine dementsprechende Ausbildung für alle axialen Teilbereiche der Antriebswelle in beiden Ausführungsvarianten A und B denkbar.

Fig. 6 zeigt in einer schematischen Schrägansicht die Antriebswelle 8 mit zwei axialen Teilbereichen 8a und 8b sowie das über die Antriebswelle geführte Antriebselement 6 gemäß dem in Fig. 5 gezeigten Ausführungsbeispiel von Ausführungsvariante B. Auch hier ist deutlich erkennbar, dass das Antriebselement 6 Teilabschnitte 6a und 6b aufweist, deren Querschnitt so ausgebildet ist, dass das Antriebselement in jedem dieser Teilabschnitte nur über den jeweils korrespondierenden axialen Bereich 8a bzw. 8b der Antriebswelle geführt wird. Insbesondere wird in dieser Darstellung deutlich, dass die Änderung des Querschnitts des Antriebselements darin besteht, dass das Antriebselement in Teilabschnitt 6b einen Strang und in Teilabschnitt 6a zwei Stränge aufweist. Im gezeigten Ausführungsbeispiel sind die Stränge 6a und 6b des Antriebselements durch ein Verbindungselement 12 verbunden, das hier als Stift ausgeführt ist.

Fig. 7a und Fig. 7b zeigen schematisch in Draufsicht zwei Ausführungsbeispiele des gemäß Ausführungsvariante B ausgebildeten Antriebselements 6. Das Antriebselement 6 weist in beiden Ausführungsbeispielen im Teilabschnitt 6b einen Strang auf und im Teilabschnitt 6a zwei Stränge. In Fig. 7a ist ein Ausführungsbeispiel gezeigt, bei dem die Stränge der beiden Teilabschnitte durch ein vorzugsweise biegesteifes Verbindungselement 12 verbunden sind.

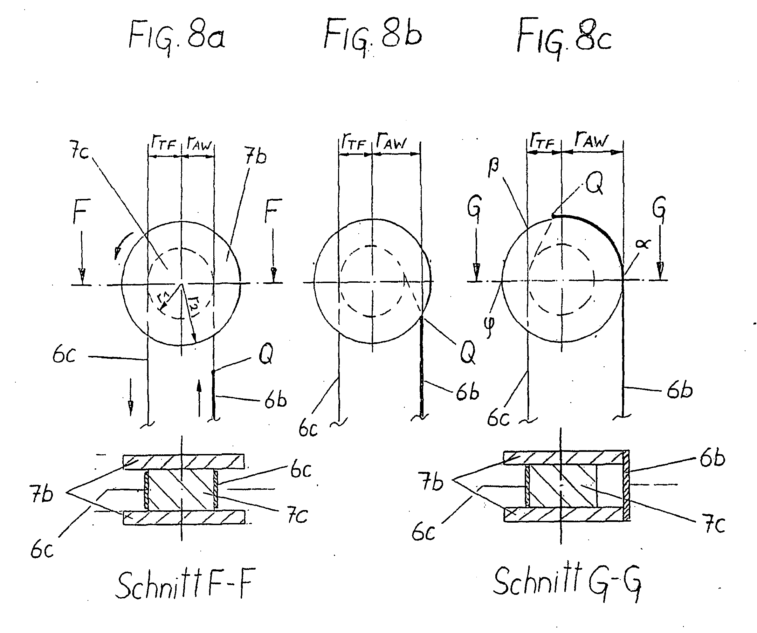

Fig. 8a-c zeigen schematisch die Änderung der Übersetzung an einer Umlenkrolle 7. Die dargestellte Umlenkrolle 7 weist zwei axiale Bereiche gemäß Ausführungsvariante A auf. Der Bereich 7c mit dem kleineren Radius r₁ liegt axial mittig und der Bereich 7b mit dem größeren Radius r₂ liegt axial beidseitig außen. Der zur Trittfläche 5 führende Antriebselementstrang mit dem zugehörigen Wirkradius r_{TF} ist in Fig. 8a-c jeweils links eingezeichnet, der zur Antriebswelle 8 rührende Strang mit dem zugehörigen Wirkradius r_{AW} jeweils rechts. Zugunsten einer einfachen Veranschaulichung der Funktionsweise der Umlenkrolle dieses Ausführungsbeispiels sind diese beiden Stränge als Spezialfall parallel dargestellt. Es ist jedoch auch eine nicht parallele Führung der beiden Stränge möglich. Zur Verdeutlichung der gemäß Ausführungsvariante A ausgebildeten Teilabschnitte des Antriebselements 6 ist in den Seitenansichten von Fig. 8a-c der (breitere) Teilabschnitt 6b dick gezeichnet, der (schmalere) Teilabschnitt 6c hingegen dünn. Der Punkt Q bezeichnet in Übereinstimmung mit Fig. 3 den Übergang zwischen diesen beiden Teilabschnitten 6b und 6c des Antriebselements. Fig. 8a zeigt die Ausgangssituation an der Umlenkrolle 7, bevor bei einer Bewegung der Trittfläche nach unten die Änderung der Übersetzung wirksam wird: Solange nur der Teilabschnitt 6c des Antriebselements über die Umlenkrolle läuft, hat das Verhältnis der Wirkradien r_{AW} / r_{TF} (und somit auch die Übersetzung der Umlenkrolle) den Wert Eins (r_{AW} / r_{TF} = r₁ / r₁ = 1). Fig. 8b zeigt die Situation, nachdem der (breitere) Teilabschnitt 6b mit Punkt Q auf die Umlenkrolle aufgelaufen ist: Die Übersetzung der Umlenkrolle r_{AW} / r_{TF} ist nunmehr auf einen Wert größer als Eins angestiegen und steigt bei weiterer Drehung der Umlenkrolle kontinuierlich weiter an, bis sie den Maximalwert r_{AW} / r_{TF} = r₂ / r₁ erreicht. Diese Situation ist in Fig. 8c gezeigt: Sobald der Punkt Q des Antriebselements die Position α erreicht, hat die Übersetzung der Umlenkrolle den Wert r_{AW} / r_{TF} = r₂ / r₁ , und die Übersetzung bleibt bei weiterer Drehung der Umlenkrolle solange konstant auf diesem Wert, bis Punkt Q des Antriebselements die Position β erreicht. Bei weiterer Drehung der Umlenkrolle sinkt dann die Übersetzung wieder kontinuierlich auf den Wert Eins, der beim Eintreffen von Punkt Q in Position ϕ erreicht wird. Im weiteren Verlauf bleibt die Übersetzung der Umlenkrolle dann konstant Eins, da nunmehr r_{AW} / r_{TF} = r₂ / r₂ =1 gilt. Die hier an Hand von Ausführungsvariante A dargestellte und beschriebene Änderung der Übersetzung an der Umlenkrolle innerhalb eines Teilabschnitts des Trittflächenhubes ist auch gemäß Ausführungsvariante B des Antriebselements und der Umlenkrolle möglich und vorgesehen. Ebenso ist es für beide Ausführungsvarianten A und B denkbar und vorgesehen, den Einfluss der Umlenkrolle 7 auf die Übersetzung dergestalt umzukehren, dass die Übersetzung der Umlenkrolle in einem Teilabschnitt des Trittflächenhubes vom Wert Eins kontinuierlich zum Minimalwert r₁ / r₂ sinkt und in der beschriebenen Weise wieder auf den Wert Eins ansteigt. Dies kann beispielsweise durch Austauschen der Teilabschnitte 6b und 6c des Antriebselements geschehen. Auch ist es durch geeignetes Aufgliedern des Antriebselements in mehr als zwei Teilabschnitte denkbar und möglich, das hier beschriebene Anheben und / oder Absenken der Übersetzung in zwei oder mehr Teilabschnitten des Trittflächenhubes mit lediglich einer Umlenkrolle zu realisieren. Ein weiterer Vorteil der Erfindung mag darin liegen, dass durch die Auswahl der Radien der axialen Teilbereiche der Umlenkrolle sowie durch die Wahl der Länge der Teilabschnitte des Antriebselements der Verlauf der Übersetzung der Umlenkrolle in weiten Grenzen gestaltet werden kann. Ein besonderer Vorteil der Erfindung mag auch darin liegen, dass sämtliche hier beschriebenen Effekte ungeachtet der Anzahl der Umdrehungen, die die Umlenkrolle innerhalb eines Trittflächenhubes macht, realisierbar sind.

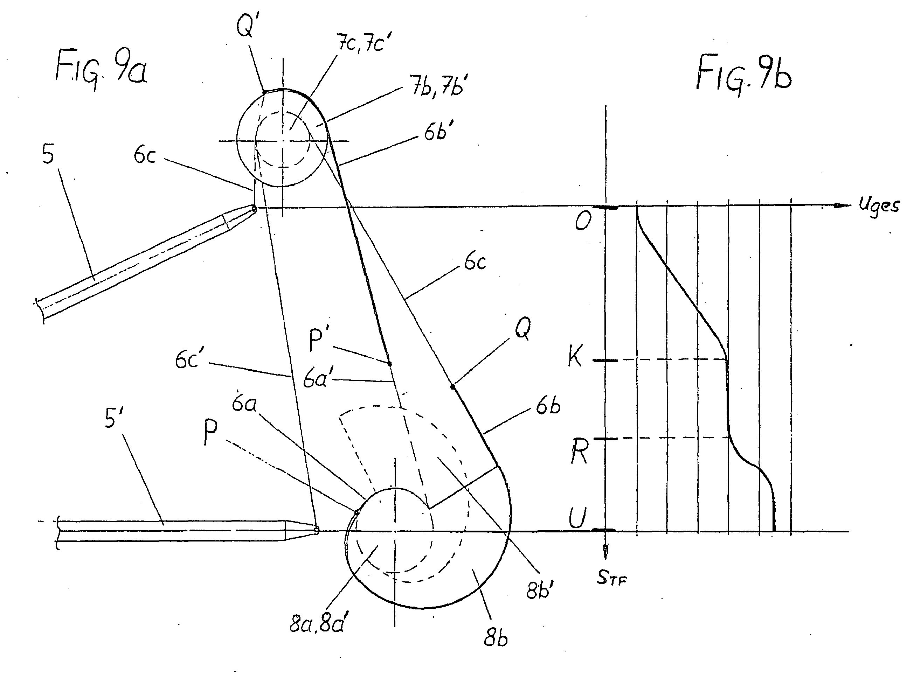

Fig. 9a zeigt schematisch eine Detailansicht der für die Kraftübertragung maßgeblichen Teile gemäß dem in Fig. 1 gezeigten Ausführungsbeispiel, wobei die Änderung der Übersetzung sowohl an der Antriebswelle 8, 8' als auch an der mit dem Fahrzeugrahmen 1 verbundenen Umlenkrolle 7, 7' gemäß Ausführungsvariante A der Erfindung dargestellt ist. Die normal zur Bildebene vorne liegende Trittfläche 5 ist in der oberen Endposition des Trittflächenhubes gezeigt, die hinten liegende Trittfläche 5' in der unteren Endposition. Die mit den Trittflächen 5, 5' verbundenen Antriebselemente 6, 6' und die Antriebswellen 8, 8' sind in diesem Ausführungsbeispiel so ausgebildet, wie in Fig. 3 gezeigt, die Umlenkrollen 7, 7' entsprechen dem in Fig. 8a-c gezeigten Ausführungsbeispiel. Zur Verdeutlichung sind die mittleren (breiteren) Teilabschnitte 6b, 6b' der Antriebselement dick eingezeichnet. Die beiden Enden der Teilabschnitte 6b, 6b' sind in Übereinstimmung mit Fig. 3 und Fig. 8a-c mit P, P' und Q, Q' bezeichnet. Von der oberen Trittfläche 5 läuft das Antriebselement 6 über den axialen Bereich 7c der Umlenkrolle 7 zur Antriebswelle 8, umschlingt dort deren axialen Teilbereich 8b und wird weiter um den axialen Teilbereich 8a geführt, wo das Antriebselement 6 aufgewickelt und mit seinem Ende montiert ist. In dieser Stellung der Trittfläche ist die Übersetzung an der Umlenkrolle 7 Eins und die Übersetzung an der Antriebswelle 8 nimmt ihren minimalen Wert ein, da der Wirkradius an der Antriebswelle (R_{W}) seinen maximalen Wert einnimmt. Bewegt man nun die Trittfläche 5 nach unten, dreht sich die Antriebswelle 8 und das Antriebselement wickelt sich kontinuierlich von ihrem axialen Bereich 8b ab. Dabei sinkt der Wirkradius R_{W} kontinuierlich, womit die Übersetzung kontinuierlich ansteigt. Nachdem das Antriebselement vollständig vom Bereich 8b abgewickelt wurde, bleibt im weiteren Verlauf des Trittflächenhubes die Übersetzung an der Antriebswelle 8 annähernd konstant, da im gezeigten Ausführungsbeispiel der axiale Bereich 8a rotationssymmetrisch ausgeführt ist, und sich daher der Wirkradius R_{W} während das Antriebselement von Bereich 8a abgewickelt wird nur mehr geringfügig ändert. Diese geringfügige Änderung rührt von der Dicke des Antriebselements her, da bei jeder Umdrehung weniger Wicklungen unter dem von der Antriebswelle abgetriebenen Antriebselementstrang liegen. Daher kann in einem Ausführungsbeispiel auch vorgesehen sein, das Antriebselement insbesondere im Teilabschnitt 6a, wo es auf die Antriebswelle aufgewickelt wird, unterschiedlich dick über seine Länge auszuführen, um so einen zusätzlichen Gradienten in die Übersetzungskennlinie einzubringen. Sobald nun der Punkt Q des Antriebselements die Umlenkrolle 7 erreicht und auf ihren Bereich 7b aufläuft, steigt die Übersetzung an der Umlenkrolle gemäß einem Ausführungsbeispiel kontinuierlich bis zu ihrem Maximalwert an, womit auch die Gesamtübersetzung des Fahrzeuges dem entsprechend weiter ansteigt. Anhand der gezeigten unteren Trittfläche 5' ist die Situation am Ende des Trittflächenhubes veranschaulicht. Eine mögliche Stellung der zur Trittfläche 5' gehörigen Antriebswelle 8' ist strichliert eingezeichnet, und man erkennt deutlich, dass es möglich ist, dass die im axialen Teilbereich 8b als zwei kongruente Kurvenscheiben ausgebildete Antriebswelle 8 innerhalb eines Trittflächenhubes mehrere Umdrehung macht, ohne mit einem Antriebselementtrum zu kollidieren.

Fig. 9b zeigt schematisch den qualitativen Verlauf der Übersetzungskennlinie des in Fig. 9a dargestellten Ausführungsbeispiels als Zusammenhang zwischen der Trittflächenstellung S_{TF} und der Gesamtübersetzung u_{ges} des Fahrzeuges, wobei die Gesamtübersetzung als das Verhältnis von Fahrzeugweg zu Trittflächenweg definiert ist. Der Trittflächenhub, der im Diagramm vertikal aufgetragen ist, erstreckt sich von Position O bis Position U. Position K bezeichnet jene Stellung der Trittfläche, in der der Punkt P des Antriebselements 6 die Kurvenscheiben des Bereiches 8b verlässt. Im Teilabschnitt zwischen Position O und Position K verläuft also die Gesamtübersetzung wie beschrieben gemäß dem Verlauf des Radius von Bereich 8b. Position R bezeichnet jene Stellung der Trittfläche, in der Punkt Q des Antriebselements die Umlenkrolle 7 erreicht und die beschriebene Änderung der Übersetzung an dieser Rolle wirksam wird. Durch die Wahl der Radien der axialen Bereiche 7a, 7b der Umlenkrolle und durch die Wahl der Länge der Teilabschnitte 6b, 6c kann Einfluss auf den Verlauf der Änderung der Übersetzung im Teilabschnitt R-U des Trittflächenhubes genommen werden, und es ist insbesondere auch möglich, die Erfindung so auszuführen, dass der Teilabschnitt R-U mit dem Teilabschnitt O-K überlappt.

Ergänzend ist darauf hinzuweisen, dass "aufweisen" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele, Aspekte oder Ausführungsvarianten beschrieben worden sind, auch in Kombination mit anderen Merkmalen oder Schritten anderer oben beschriebener Ausführungsbeispiele, Aspekte oder Ausführungsvarianten verwendet werden können. Bezugszeichen in den Ansprüchen sind nicht als Einschränkung anzusehen.

## Patentansprüche

1. Antriebsvorrichtung für ein muskefkraftbetriebenes Fahrzeug, wobei die Antriebsvorrichtung aufweist:
zumindest eine Antriebswelle (8), und
zumindest ein Antriebselement (6),
wobei die Antriebswelle (8) entlang ihrer axialen Richtung zumindest einen ersten Bereich (8a) und einen zweiten Bereich (8b) mit voneinander unterschiedlichen oder variierenden Radien aufweist, **dadurch gekennzeichnet, daß** das Antriebselement (6) entlang einer Länge des Antriebselements zumindest einen ersten Teilabschnitt (6a) und einen zweiten Teilabschnitt (6b) aufweist, wobei ein Querschnitt des ersten Teilabschnitts (6a) unterschiedlich zu einem Querschnitt des zweiten Teilabschnitts (6b) ist, und
wobei die Antriebswelle (8) und das Antriebselement (6, 6') derart aneinander angepasst sind, dass bei einer Bewegung des Antriebselements (6, 6') der erste Teilabschnitt (6a) über den ersten Bereich (8a) und der zweite Teilabschnitt (6b) über den zweiten Bereich (8b) führbar ist.

2. Antriebsvorrichtung nach Anspruch 1,
wobei die Antriebswelle (8) und das Antriebselement (6) derart aneinander angepasst sind, dass bei einer Bewegung des Antriebselements (6) das Antriebselement (6) fluchtend zu der Antriebswelle (8) ausgerichtet ist.

3. Muskelkraftbetriebenes Fahrzeug, insbesondere Stepproller, welches aufweist:
eine Antriebsvorrichtung nach Anspruch 1 oder 2,
zumindest ein Antriebsrad (2);
zumindest eine Trittfläche (5, 5'), die über einen Trittflächenhub bewegbar ist,
wobei die Antriebswelle (8, 8') mit dem zumindest einen Antriebsrad (2) über einen Freilaufmechanismus koppelbar ist,
wobei das Antriebselement (6, 6') derart eingerichtet ist, dass mittels ihm eine Kraftübertragung von der wenigsten einen Trittfläche (5, 5') auf das wenigstens eine Antriebsrad möglich ist,
wobei die Teilabschnitte (6a, 6b) des Antriebselementes (6) so ausgebildet sind, dass innerhalb des Trittflächenhubes der erster Teilabschnitt (6a) der zumindest zwei Teilabschnitte des Antriebselements (6) über den ersten axialen Bereich (8a) der zumindest zwei axialen Bereiche der Antriebswelle (8) geführt ist,
und der zweiter Teilabschnitt (6b) der zumindest zwei Teilabschnitte des Antriebselements (6) über den zweiten axialen Bereich (8b) der zumindest zwei axialen Bereiche der Antriebswelle (8) geführt ist.

4. Fahrzeug nach Anspruch 3, wobei zumindest einer der zumindest zwei axialen Bereiche (8b) der Antriebswelle (8) so ausgebildet ist, dass sein Radius variiert, wobei die Variation vorzugsweise kontinuierlich ansteigend ist.

5. Fahrzeug nach Anspruch 3 oder 4, wobei die Längen und Querschnitte der Teilabschnitte (6a, 6b) des Antriebselements (6) und die axialen Bereiche (8b) der Antriebswelle (8), deren Radien variieren, so ausgebildet sind, dass alle Punkte, mit denen diese axialen Bereiche (8b) der Antriebswelle ins Antriebselement (6) eingreifen, während eines Trittflächenhubes genau einmal ins Antriebselement (6) eingreifen.

6. Fahrzeug nach einem der Ansprüche 3 bis 5, ferner aufweisend:
zumindest eine Umlenkrolle (7),
wobei das Antriebselement (6) über die zumindest eine Umlenkrolle (7) zur Antriebswelle (8) geführt ist.

7. Fahrzeug nach Anspruch 6,
wobei die zumindest eine Umlenkrolle (7) axial in zumindest zwei Bereiche (7b, 7c) mit voneinander unterschiedlichen Radien gegliedert ist, und
wobei das Antriebselement (6) derart eingerichtet ist, dass es in jenem Abschnitt, in welchem es während des Trittflächenhubes über die zumindest eine Umlenkrolle geführt ist, zumindest zwei Teilabschnitte (6b, 6c) mit voneinander unterschiedlichen Querschnitten aufweist, die so ausgebildet sind, dass das Antriebselement (6) innerhalb des Trittflächenhubes über zumindest zwei der axialen Bereiche (7b, 7c) der Umlenkrolle (7) geführt wird.

8. Fahrzeug nach einem der Ansprüche 3 bis 7,
wobei die Antriebswelle (8) so ausgebildet ist, dass der axiale Bereich (8a) mit dem kleinsten maximalen Radius in axialer Richtung mittig angeordnet ist, und der Bereich mit dem nächst größeren maximalen Radius (8b) axial beidseitig außen angeordnet ist.

9. Fahrzeug nach einem der Ansprüche 7 oder 8,
wobei die zumindest eine Umlenkrolle (7) so ausgebildet ist, dass der axiale Bereich mit dem kleinsten Radius (7c) in axialer Richtung mittig angeordnet ist, und der Bereich mit dem nächst größeren Radius (7b) axial beidseitig außen angeordnet ist.

10. Fahrzeug nach einem der Ansprüche 8 oder 9,
wobei das Antriebselement (6) zumindest zwei Teilabschnitte (6a, 6b, 6c) mit voneinander unterschiedlicher Breite oder mit Verbreiterungselementen (10, 11) aufweist.

11. Fahrzeug nach einem der Ansprüche 3 bis 7,
wobei die Antriebswelle (8) so ausgebildet ist, dass der axiale Bereich mit dem größten maximalen Radius (8b) in axialer Richtung mittig angeordnet ist, und der Bereich mit dem nächst kleineren maximalen Radius (8a) axial beidseitig außen angeordnet ist.

12. Fahrzeug nach einem der Ansprüche 7 oder 11,
wobei die zumindest eine Umlenkrolle (7) so ausgebildet ist, dass der axiale Bereich (7b) mit dem größten Radius in axialer Richtung mittig angeordnet ist, und der Bereich (7a) mit dem nächst kleineren Radius axial beidseitig außen angeordnet ist.

13. Fahrzeug nach einem der Ansprüche 3 bis 12,
wobei das Antriebselement (6) zumindest einen Teilabschnitt (6a) mit zumindest zwei Strängen aufweist.

14. Fahrzeug nach einem der Ansprüche 3 bis 13,
wobei das Antriebselement (6) Versteifungselemente aufweist, die vorzugsweise als quer zur Längsrichtung des Antriebselements angebrachte Plättchen oder Stifte ausgeführt sind.

15. Fahrzeug nach einem der Ansprüche 3 bis 14,
wobei am Antriebselement (6) Führungselemente (9) angebracht sind.

16. Fahrzeug nach einem der Ansprüche 3 bis 15,
wobei das Antriebselement (6) an der Antriebswelle (8) auf- und abwickelbar befestigt ist.

17. Fahrzeug nach einem der Ansprüche 3 bis 16,
wobei das Antriebselement (6) entlang der Länge des Antriebselements unterschiedlich dick ausgebildet ist.

18. Fahrzeug nach einem der Ansprüche 3 bis 17,
wobei das trittflächenseitige Ende des Antriebselements (6) verstellbar montiert ist.

19. Fahrzeug nach einem der Ansprüche 3 bis 18,
wobei das trittflächenseitige Ende des Antriebselements (6) und /oder zumindest eine Umlenkrolle (7) gefedert montiert ist.

## Claims

1. Driving mechanism for a vehicle propelled by muscle power, wherein the driving mechanism comprises:
at least one drive shaft (8); and
at least one driving element (6);
wherein the drive shaft (8, 8') comprises, along its axial direction, at least a first region (8a) and a second region (8b) with radii which differ from one another or are variable,
**characterized in that**
the driving element (6) comprises, along a length of the driving element, at least a first partial section (6a) and a second partial section (6b), wherein a cross-section of the first partial section (6a) is different to a cross-section of the second partial section (6b), and
wherein the drive shaft (8) and the driving element (6, 6') are adapted in such a way that, during a motion of the driving element (6, 6'), the first partial section (6a) is guidable via the first region (8a) and the second partial section (6b) is guidable via the second region (8b).

2. Driving mechanism according to claim 1,
wherein the drive shaft (8) and the driving element (6) are adapted in such a way that the driving element (6) and the drive shaft (8) are aligned with each other during a motion of the driving element (6).

3. Vehicle propelled by muscle power, in particular scooter, comprising:
a driving mechanism according to claim 1 or 2;
at least one driving wheel (2);
at least one tread surface (5, 5') which is movable via a tread surface stroke,
wherein the drive shaft (8, 8') is couplable with the at least one driving wheel (2) via a freewheeling mechanism;
wherein the driving element (6, 6') is adapted in such a way that, by means of the driving element (6, 6'), a force transmission takes place from the at least one tread surface (5, 5') to the at least one driving wheel;
wherein the partial sections (6a, 6b) of the driving element (6) are formed in such a way that within the tread surface stroke the first partial section (6a) of the at least two partial sections of the driving element (6) is guided via the first axial region (8a) of the at least two axial regions of the drive shaft (8), and the second partial section (6b) of the at least two partial sections of the driving element (6) is guided via the second axial region (8a) of the at least two axial regions of the drive shaft (8).

4. Vehicle according to claim 3,
wherein at least one of the at least two axial regions(8b) of the drive shaft (8) are formed in such a way that its radius varies, wherein the variation is preferably a continuously increasingly one.

5. Vehicle according to claim 3 or 4,
wherein the lengths and the cross-sections of the partial sections (6a, 6b) of the driving element (6) and of the axial regions (8b) of the drive shaft (8), the radii of which vary, are adapted in such a way that all points, with which these axial regions (8b) of the drive shaft engage with the driving element (6), are engage exactly once with the driving element (6) during one tread surface stroke.

6. Vehicle according to one of the claims 3 to 5 further comprising:
at least one deflecting roller (7),
wherein the driving element (6) is guided to the drive shaft (8) via the at least one deflecting roller (7).

7. Vehicle according to claim 6,
wherein the at least one deflecting roller (7) is structured in at least two regions (7b, 7c) having different radii, and
wherein the driving element (6) is designed in such a way that it comprises at least two partial sections (6b, 6c) in each section in which it is guided via the deflecting roller during the tread surface stroke, which partial sections (6b, 6c) having different cross-sections with respect to each other, which are adapted in such a way that the driving element (6) is guided via at least two of the axial regions (7b, 7c) of the deflecting roller (7) during the tread surface stroke.

8. Vehicle according to any one of the claims 3 to 7,
wherein the drive shaft (8) is formed in such a way that the axial region (8a) having the smallest maximum radius is arranged centrally with respect to the axial direction and that the region having the maximum radius next in size (8b) is arranged axially outwardly on both sides.

9. Vehicle according to claim 7 or 8,
wherein the at least one deflecting roller (7) is formed in such a way that the axial region having the smallest radius (7c) is arranged centrally with respect to the axial direction and that the region having the radius next in size (7b) is arranged axially outwardly on both sides.

10. Vehicle according to claim 8 or 9,
wherein the drive element (6) comprises at least to partial sections (6a, 6b, 6c) having different width or having widening elements (10, 11).

11. Vehicle according to any one of the claims 3 to 7,
wherein the drive shaft (8) is formed in such a way that the axial region having the biggest maximum radius (8b) is arranged centrally with respect to the axial direction and that the region having the next smaller radius (8a) is arranged axially outwardly on both sides.

12. Vehicle according to claim 7 or 11,
wherein the at least one deflecting roller (7) is formed in such a way that the axial region (7b) having the biggest radius is arranged centrally with respect to the axial direction and that the region (7a) having the next smaller radius is arranged axially outwardly on both sides.

13. Vehicle according to any one of the claims 3 to 12,
wherein the driving element (6) comprises at least one partial region (6a) having at least two legs.

14. Vehicle according to any one of the claims 3 to 13,
wherein the driving element (6) comprises stiffening elements, which are preferably embodied by pads or pins arranged transversely with respect to the longitudinal direction of the driving element.

15. Vehicle according to any one of the claims 3 to 14,
wherein guiding elements (9) are arranged on the driving element (6).

16. Vehicle according to any one of the claims 3 to 15,
wherein the driving element (6) is fixed to the drive shaft such that it can be winded and unwinded.

17. Vehicle according to any one of the claims 3 to 16,
wherein the driving element (6) is formed in such a way that it has different thicknesses along the length of the driving element.

18. Vehicle according to any one of the claims 3 to 17,
wherein the end of the driving element (6), which is arranged at the tread surface side, is adjustably mounted.

19. Vehicle according to any one of the claims 3 to 18,
wherein the end of the driving element (6), which is arranged at the tread surface side, and/or at least one deflecting roller is spring mounted.

## Revendications

1. Dispositif d'entraînement pour un véhicule mû par la force musculaire, le dispositif d'entraînement présentant :
au moins un arbre d'entraînement (8), et
au moins un élément d'entraînement (6),
dans lequel l'arbre d'entraînement (8) présentant le long de sa direction axiale au moins une première partie (8a) et une deuxième partie (8b) avec des rayons différents ou variables, **caractérisé en ce que** l'élément d'entraînement (6) présente le long d'une longueur de l'élément d'entraînement au moins un premier tronçon partiel (6a) et un deuxième tronçon partiel (6b), une section du premier tronçon partiel (6a) étant différente d'une section du deuxième tronçon partiel(6b), et
dans lequel l'arbre d'entraînement (8) et l'élément d'entraînement (6, 6') étant adaptés l'un à l'autre de manière à ce qu'avec un mouvement de l'élément d'entraînement (6, 6'), le premier tronçon partiel(6a) peut être guidé sur la première partie (8a) et le deuxième tronçon partiel(6b) pouvant être guidé sur la deuxième partie (8b).

2. Dispositif d'entraînement selon la revendication 1, dans lequel l'arbre d'entraînement (8) et l'élément d'entraînement (6) sont adaptés l'un à l'autre de manière à ce qu'avec un mouvement de l'élément d'entraînement (6), l'élément d'entraînement (6) est orienté en alignement par rapport à l'arbre d'entraînement (8).

3. Véhicule mû par la force musculaire, en particulier trottinette, laquelle présente :
un dispositif d'entraînement selon la revendication 1 ou 2,
au moins une roue d'entraînement (2) ;
au moins un marchepied (5, 5') pouvant se mouvoir le long d'une course de marchepied,
dans lequel l'arbre d'entraînement (8, 8') pouvant être couplé à cette ou ces roues d'entraînement (2) par l'intermédiaire d'un mécanisme à roue libre, l'élément d'entraînement (6, 6') étant étudié de manière à ce que grâce à lui, un transfert de force de ce ou ces marchepieds (5, 5') vers cette ou ces roues d'entraînement est possible,
dans lequel les tronçons partiels (6a, 6b) de l'élément d'entraînement (6) étant réalisés de manière à ce que, pendant la course du marchepied, le premier tronçon partiel (6a) de ces tronçons, au moins au nombre de deux, de l'élément d'entraînement (6) est guidé sur la première partie axiale (8a) des parties axiales, au moins au nombre de deux, de l'arbre d'entraînement (8), et à ce que le deuxième tronçon partiel(6b) de ces tronçons, au moins au nombre de deux, de l'élément d'entraînement (6) soit guidé sur la deuxième partie axiale (8b) des parties axiales, au moins au nombre de deux, de l'arbre d'entraînement (8).

4. Véhicule selon la revendication 3, dans lequel au moins l'une des parties axiales (8b), au moins au nombre de deux, de l'arbre d'entraînement (8) est réalisée de manière à ce que son rayon varie, la variation augmentant de préférence de manière continue.

5. Véhicule selon la revendication 3 ou 4, dans lequel les longueurs et sections des tronçons partiels (6a, 6b) de l'élément d'entraînement (6) et les parties axiales (8b) de l'arbre d'entraînement (8) dont les rayons varient, sont réalisées de manière à ce que tous les points avec lesquels ces parties axiales (8b) de l'arbre d'entraînement sont en prise dans l'élément d'entraînement (6), se mettent en prise exactement une fois dans l'élément d'entraînement (6) pendant une course de marchepied.

6. Véhicule selon l'une quelconque des revendications 3 à 5, présentant par ailleurs au moins un galet de renvoi (7), dans lequel l'élément d'entraînement (6) est guidé par l'intermédiaire de ce ou ces galets de renvoi (7) vers l'arbre d'entraînement (8).

7. Véhicule selon la revendication 6, dans lequel :
ce ou ces galets de renvoi (7) sont divisés axialement au moins en deux parties (7b, 7c) avec des rayons qui diffèrent entre eux, et
l'élément d'entraînement (6) est étudié de manière à présenter, dans celui des tronçons dans lequel il est guidé pendant la course du marchepied via le ou les galets de renvoi, au moins deux tronçons partiels (6b, 6c) avec des sections qui diffèrent entre elles, lesquels sont réalisés de manière à ce que l'élément d'entraînement (6) soit guidé pendant la course du marchepied sur au moins deux des parties axiales (7b, 7c) du galet de renvoi (7).

8. Véhicule selon l'une quelconque des revendications 3 à 7, dans lequel l'arbre d'entraînement (8) est réalisé de manière à ce que la partie axiale (8a) avec le plus petit rayon maximal en direction axiale soit disposée au milieu, et à ce que la partie avec le rayon maximal de dimension immédiatement supérieure (8b) soit disposée axialement des deux côtés à l'extérieur.

9. Véhicule selon l'une quelconque des revendications 7 ou 8, dans lequel le ou les galets de renvoi (7) sont réalisés de manière à ce que la partie axiale avec le plus petit rayon (7c) en direction axiale soit disposée au milieu, et à ce que la partie avec le rayon de dimension immédiatement supérieure (7b) soit disposée axialement des deux côtés à l'extérieur.

10. Véhicule selon l'une quelconque des revendications 8 ou 9, dans lequel l'élément d'entraînement (6) présente au moins deux tronçons partiels (6a, 6b, 6c) avec des largeurs qui diffèrent entre elles ou avec des éléments d'élargissement (10, 11).

11. Véhicule selon l'une quelconque des revendications 3 à 7, dans lequel l'arbre d'entraînement (8) est réalisé de manière à ce que la partie axiale avec le rayon maximal le plus grand (8b) soit disposée au milieu en direction axiale, et à ce que la partie avec le rayon maximal de dimension immédiatement inférieure (8a) soit disposée axialement des deux côtés à l'extérieur.

12. Véhicule selon l'une quelconque des revendications 7 ou 11, dans lequel ce ou ces galets de renvoi (7) sont réalisés de manière à ce que la partie axiale (7b) avec le plus grand rayon soit disposée au milieu en direction axiale, et à ce que la partie (7a) avec le rayon de dimension immédiatement inférieure soit disposée axialement des deux côtés à l'extérieur.

13. Véhicule selon l'une quelconque des revendications 3 à 12, dans lequel l'élément d'entraînement (6) présente au moins un tronçon partiel (6a) avec au moins deux branches.

14. Véhicule selon l'une quelconque des revendications 3 à 13, dans lequel l'élément d'entraînement (6) présente des éléments de renforcement, lesquels sont réalisés de préférence en tant que plaquettes ou pointes placées transversalement à la direction longitudinale de l'élément d'entraînement.

15. Véhicule selon l'une quelconque des revendications 3 à 14, dans lequel des éléments de guidage (9) sont placés sur l'élément d'entraînement (6).

16. Véhicule selon l'une quelconque des revendications 3 à 15, dans lequel l'élément d'entraînement (6) est fixé de manière à pouvoir être enroulé et déroulé sur l'arbre d'entraînement (8).

17. Véhicule selon l'une quelconque des revendications 3 à 16, dans lequel l'élément d'entraînement (6) est réalisé avec une différence d'épaisseur le long de la longueur de l'élément d'entraînement.

18. Véhicule selon l'une quelconque des revendications 3 à 17, dans lequel l'extrémité du côté du marchepied de l'élément d'entraînement (6) est montée de manière réglable.

19. Véhicule selon l'une quelconque des revendications 3 à 18, dans lequel l'extrémité du côté du marchepied de l'élément d'entraînement (6) et/ou au moins un galet de renvoi (7) est montés de manière élastique.
